# EUROPEAN PATENT SPECIFICATION

(11) **EP 4 211 034 B1**
(45) Date of publication and mention of the grant of the patent: **15.10.2025**
(21) Application number: 21794607.8
(22) Date of filing: 07.09.2021
(51) Int. Cl.: B63H 8/20, B63H 8/23, B63H 8/25, B63H 9/08, B63B 21/08

(54) **LOCK APPARATUS**
SCHLOSSGERÄT
APPAREIL DE VERROUILLAGE

(30) Priority: 10.09.2020 GB 202014265
(43) Date of publication of application: 19.07.2023
(73) Proprietor: Rigging Projects Ltd, Totton, Southampton SO40 3WX (GB)
(72) Inventor: BLACK, Nicholas, Suffolk IP9 2RQ (GB); DELAPERRIERE, Antoine, 46182 Paterna (ES)
(74) Representative: Dummett Copp LLP
(86) International application number: PCT/GB2021/052303
(87) International publication number: WO 2022/053793

(56) References cited:
- WO-A1-2010/112603
- WO-A1-2019/094924
- WO-A1-84/01414
- FR-A1- 2 794 100
- FR-A1- 2 891 032
- FR-A1- 2 910 569
- US-A- 3 345 710

## Description

### FIELD OF THE INVENTION

The present invention relates to a lock apparatus for releasably securing a line under load. Embodiments of the present invention relate to a halyard lock apparatus for a marine vessel.

### BACKGROUND TO THE INVENTION

Sailing vessels are typically equipped with lines or ropes for operating moving parts of the vessel. There is often a need to secure a line in place in order to fix the position of a moving part. Sails are typically hoisted by lines known as halyards. One end of a halyard is connected to a sail, for example by a shackle arrangement. Generally, the halyard is fed through a sheave or pulley mounted towards an upper end of a mast and the halyard runs down the mast to an accessible location (such as a cockpit) from where it can be pulled or released in order to hoist or lower the sail. To keep a sail hoisted, the halyard is tensioned and secured using a cleat or other suitable locking mechanism, typically located in the cockpit.

Halyards may be secured under considerable tension, and therefore may apply load to the mast and to components such as sheaves, increasing the risk of wear and damage. Halyards may also stretch or creep under tension, leading to undesirable loss of sail tension. To reduce these effects, it is known to secure a halyard using a locking device, known as a halyard lock, mounted to the mast, for example close to a sheave. In this way, only a shorter length of halyard between the lock and sail is kept under tension, reducing the effects of stretching and reducing forces on the mast.

Some known halyard locks are arranged to lock when the halyard is hoisted to a predetermined position and released. Such locks typically use a lock member such as a ball, bayonet or slug (also known as a bullet) connected in an inline arrangement with the halyard. The bullet is arranged to be releasably retained by the halyard lock in order to secure and release the halyard. A halyard lock mounted on the mast is typically not directly accessible by crew in order to operate the lock and so some halyard locks are arranged to be released by pulling a trip line. Other known halyard locks are arranged to unlock automatically when the halyard is tensioned or hoisted to the predetermined position a second time, or hoisted further (over-hoisted) past the predetermined position. With these arrangements, halyard locks may be operated from the cockpit or deck level simply by hoisting and releasing the halyard, providing a "hoist to lock, hoist to unlock" method of operation. One known locking mechanism for a halyard lock disclosed in WO 2019/094924 A1 uses latches which are arranged to allow insertion of a halyard bullet into the lock in a first direction and to retain the bullet against movement in an opposite direction. Upon further hoisting of the halyard in the first direction, the latches move to allow release of the bullet in the opposite direction. The latches are moved by the action of the bullet together with a system of magnets. Another known locking mechanism uses a bullet provided with cams, where the bullet is arranged to rotate in an arrangement similar to a typical click-pen mechanism. FR 2 794 100 A1 discloses a locking mechanism in which a mobile part attachable to the top of a sail inserts into a fixed part attached to a mast and the fixed part comprises captive balls which are radially moveable to block or allow release of the mobile part from the fixed part. FR 2 891 032 A1 discloses a locking mechanism in which a releasable part attachable to a sail is inserted between radially inwardly-biased lock parts which block subsequent removal of the releasable part, and in which further insertion of the releasable part urges the lock parts radially outwards to allow release of the releasable part.

It is important that halyard locks are robust and reliable, since jamming or failure of a lock is potentially dangerous (for example if a sail cannot be lowered) and may lead to damage of other components. It is also desirable for halyard locks to be compact and lightweight, particularly in racing applications, to reduce windage and weight on the mast.

It is against that background that the present invention has been devised.

### SUMMARY OF THE INVENTION

According to a first aspect of the invention there is provided a lock apparatus for releasably securing a load to a supporting structure while the load applies force in a load direction, the lock apparatus comprising a lock member attached or attachable to the load and a lock assembly for attachment to the supporting structure. The lock assembly comprises at least one locking element configured to move between a locked position in which the locking element blocks movement of the lock member in the load direction, and an unlocked position in which the lock member is moveable in the load direction, an actuator arranged to cooperate with the locking element, and a releasable coupling for coupling the actuator to the lock member. The coupling is arranged to couple the actuator to the lock member upon movement of the lock member towards the actuator in an insertion direction, opposite to the load direction. Subsequent movement of the lock member in the load direction first carries the actuator in the load direction to move the locking element towards the locked position, then causes the coupling to decouple the actuator from the lock member and brings the lock member into engagement with the locking element, thereby to keep the locking element in the locked position to block further movement of the lock member in the load direction.

The present invention therefore provides a lock apparatus which can be operated by movement of the lock member. The coupling and actuator provide a reliable mechanism to couple movement of the lock member to locking and unlocking of the lock apparatus.

The coupling may decouple the actuator from the lock member before, after, or substantially at the same time as the lock member comes into engagement with the locking element.

Preferably, subsequent movement of the lock member in the insertion direction releases the locking element to move to the unlocked position, releasing the lock member for movement in the load direction. In this way, a "hoist to lock, hoist to unlock" mechanism is provided.

Since the actuator is already decoupled from the lock member by the end of the locking process, during unlocking the locking element is free to move to the unlocked position as soon as the lock member has moved sufficiently in the insertion direction to disengage from the locking element. In this way, relatively little movement of the lock member is required to trigger unlocking. Also, during unlocking, movement of the lock member in the load direction occurs without the lock member carrying the actuator in the load direction.

The locking element may be biased into the unlocked position. With this arrangement, the locking element may return to the unlocked position automatically when released.

The lock member may be attached or attachable to a control line for moving the lock member in the insertion direction. In this way, the lock apparatus may be operated by tensioning and releasing the control line.

The lock apparatus may comprise a guide member arranged to guide movement of the actuator. Preferably, the guide member is slidably engaged with the actuator.

The lock apparatus may comprise a stop to limit movement of the actuator in the insertion direction. The coupling may be arranged to couple the actuator to the lock member upon movement of the lock member in the insertion direction while movement of the actuator in the insertion direction may be limited by the stop. In this way, the stop may cause coupling of the lock member with the actuator upon movement of the lock member in the insertion direction. Preferably, the guide member comprises the stop.

The lock apparatus may comprise a limiter positioned to limit movement of the lock member in the insertion direction after coupling of the actuator to the lock member. In this way, the limiter may provide an indication to a user of coupling of the actuator to the lock member. The limiter may also prevent the lock member from contacting other parts of the lock assembly. For example, the limiter may prevent the lock member from contacting a sheave. Preferably, the guide member comprises the limiter.

The locking element may be pivotally mounted, and may act as a pawl. The locking element may comprise a ramped surface arranged to cooperate with the actuator to cause movement of the locking element towards the locked position.

The lock member may comprise an enlarged diameter region for engagement with the coupling. The enlarged diameter region may comprise a circumferential step or rib. In one example, the enlarged diameter region comprises a rib, which provides a circumferential step for engagement with the coupling.

Preferably, the lock member comprises an engagement surface for engagement with the locking element.

The locking element may comprise a recessed portion for engagement with the engagement surface of the lock member to engage the lock member with the locking element. Preferably, the recessed portion comprises a seat portion having a shape complementary to a shape of the engagement surface. In this way, a larger contact area may be provided between the lock member and the locking element so as to reduce and/or more evenly distribute forces through parts of the lock apparatus.

The engagement surface of the lock member may comprise a convex surface and the recessed portion of the locking element may comprise a concave surface having a complementary shape to the convex surface. In this way, some tolerance to misalignment of the lock member and locking element is provided.

Preferably the coupling comprises a resilient retaining ring. Preferably the retaining ring is disposed in a bore of the actuator. Alternatively, the coupling may comprise a ball plunger, O-ring, magnets, or other suitable means for releasably coupling the lock member with the actuator. Preferably, the coupling is carried by the actuator.

Preferably, when in the locked position the locking element at least partly defines a restricted opening having a smaller diameter than a part of the lock member.

Preferably, the lock apparatus comprises two or more locking elements. In this way, load on the lock member in the load direction may be more evenly distributed through the lock apparatus to improve reliability, and to allow parts of the lock apparatus to be manufactured from lighter materials.

Preferably, when two or more locking elements are provided, the locking elements abut one another when in the locked position.

The control line, when provided, may comprise a sail control line. The control line may comprise a halyard and the load may be a sail. The supporting structure may comprise a mast. In this way the lock apparatus may be used for releasably securing a sail load to a mast. However, the lock apparatus may be used in substantially any application in which it is desirable to secure a load to a supporting structure.

According to a second aspect of the invention, there is provided a lock assembly for use in the lock apparatus according to the first aspect of the invention.

Preferred and/or optional features of each aspect and embodiment of the invention may also be used, alone or in appropriate combination, in the other aspects and embodiments also.

### BRIEF DESCRIPTION OF THE DRAWINGS

Embodiments of the present invention will now be described, by way of example only, with reference to the accompanying drawings, in which like reference numbers are used for like features and in which:
Figure 1 is a cross-sectional view of lock apparatus according to the invention, mounted to a mast and in use with a halyard;
Figure 2 is a perspective view of part of the lock apparatus of Figure 1;
Figure 3 is an exploded perspective view of part of the lock apparatus of Figure 1;
Figure 4A is a perspective view of part of the lock apparatus of Figure 1;
Figure 4B is a perspective view of part of the lock apparatus of Figure 1, showing part of the lock apparatus in a locked configuration;
Figure 5 is a cross-sectional view of the lock apparatus of Figure 1, showing the lock apparatus in a first unlocked configuration;
Figure 6 is a cross-sectional view of the lock apparatus of Figure 1, showing the lock apparatus in a second unlocked configuration;
Figure 7 is a cross-sectional view of the lock apparatus of Figure 1, showing the lock apparatus in a pre-locked configuration;
Figure 8 is a cross-sectional view of the lock apparatus of Figure 1, showing the lock apparatus in an intermediate configuration;
Figure 9 is a cross-sectional view of the lock apparatus of Figure 1, showing the lock apparatus in a locked configuration;
Figure 10 is a perspective view of part of the lock apparatus of Figure 1, showing part of the lock apparatus in a locked configuration; and
Figures 11A and 11B are a side view and a perspective view, respectively, of part of a lock apparatus according to another embodiment of the invention.

### DESCRIPTION OF THE PREFERRED EMBODIMENTS

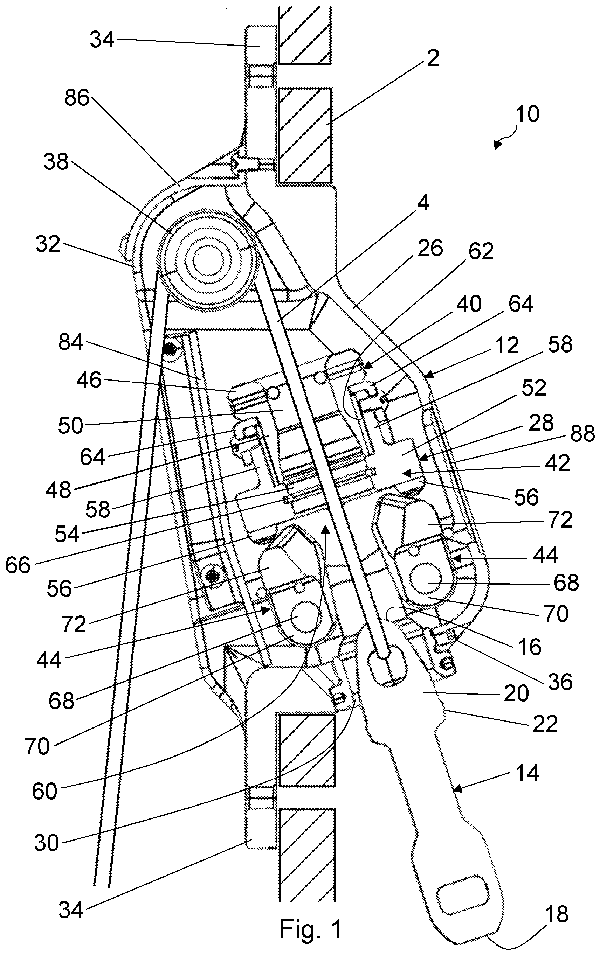

Figures 1 to 10 show a lock apparatus that can be used as a halyard lock according to an embodiment of the invention.

In this description, the lock apparatus is described in use mounted to a mast. Accordingly, the terms "upwardly", "upper" and related terms refer to a direction away from gravity in use (e.g. towards the top in Figures 1 to 10), which may be referred to as an insertion direction. The terms "downwardly", "lower" and related terms refer to an opposite direction (e.g. towards the bottom in Figures 1 to 10), which may be referred to as a load direction. It will be appreciated however, that the lock apparatus may be used in substantially any orientation.

Referring to Figure 1, the lock apparatus 10 comprises a lock assembly 12 and a lock member 14. The lock assembly 12 is arranged to be mounted to a supporting structure such as the mast 2 of a sailing vessel. The lock member 14 is arranged to be connected in use to a rope or control line such as a halyard 4, and to a load such as a sail (not shown). The lock assembly 12 is arranged to releasably retain the lock member 14 in order to releasably secure load in a fixed position with respect to the mast 2. The mast 2 and halyard 4 shown in Figure 1 are omitted from the remaining figures for clarity.

In this embodiment, the lock member is in the form of an elongate bayonet 14. A first end 16 of the bayonet 14 is arranged to be connected (e.g. spliced) to the halyard 4 for hoisting and lowering a sail. A second end 18 of the bayonet 14 is arranged to be connected to the sail, for example by a load line such as a shorter length of halyard, or by a shackle, swivel, hook, or other connector. Accordingly, an aperture is provided adjacent each end of the bayonet 14.

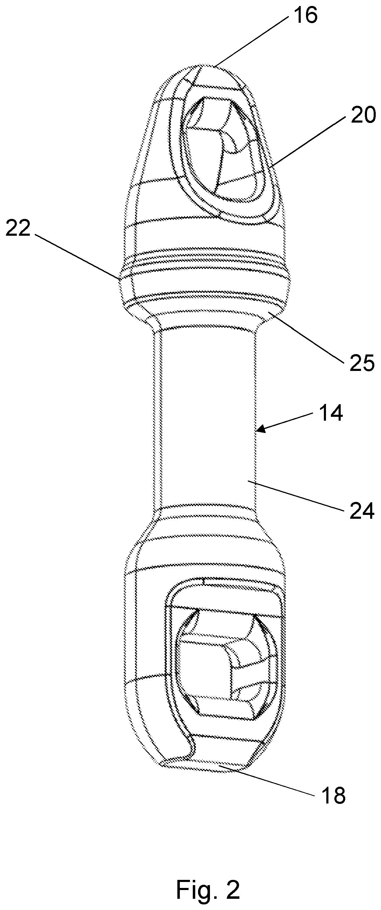

Referring also to Figure 2, the first end 16 of the bayonet 14 comprises an enlarged head 20 having a circumferential rib 22. The rib 22 provides an enlarged diameter portion of the bayonet 14. An elongate shank 24 extends from the head 20 towards an enlarged tail portion adjacent the second end 18 of the bayonet 14. An engagement surface in the form of a generally annular shoulder 25 is provided between the shank 24 and the head 20. The head 20 tapers to a rounded tip at the first end 16 of the bayonet 14.

Referring back to Figure 1, the lock assembly 12 comprises a housing 26 and a locking mechanism 28. The housing comprises a generally hollow body having a first opening 30 for receiving the bayonet 14, and a second opening 32 for receiving part of the halyard 4. The housing 26 is provided with mounting flanges 34 for securing the housing 26 to the mast 2. In this embodiment, the housing 26 is mounted in an aperture in the mast 2 such that the first opening 30 is disposed adjacent a first, lower end 36 of the housing 26 and opens generally downwardly and away from the mast 2, and the second opening 32 opens into an interior of the mast 2. A sheave or pulley wheel 38 is disposed in an upper part of the housing 26 adjacent the second opening 32. In use, the halyard 4 connected to the first end 16 of the bayonet 14 passes around the sheave 38 and extends through the second opening 32 into the mast 2, and down through the mast 2 to a cockpit, from where the halyard 4 can be tensioned or released by crew.

The locking mechanism 28 is mounted in the housing 26 and is arranged to receive part of the bayonet 14 in order to retain part of the bayonet 14 in the housing 26.

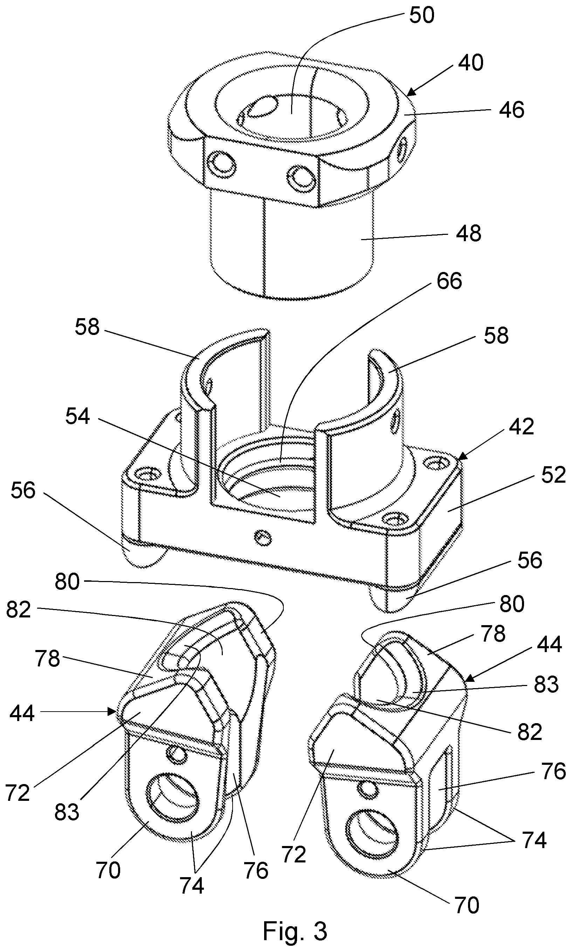

Referring additionally to Figure 3, the locking mechanism 28 comprises a guide member 40, a moveable actuator in the form of a plunger 42 and a pair of locking elements or pawls 44.

The guide member 40 is mounted in a fixed position in the housing 26 and is spaced apart from the first opening 30. The guide member 40 is generally tubular, and comprises a generally annular mounting portion 46, and a tubular guide portion 48 which extends downwardly from the mounting portion 46. An outer diameter of the mounting portion 46 is greater than an outer diameter of the guide portion 48. The guide member 40 is arranged to engage with and guide movement of the plunger 42, as described further below.

A bore 50 of the guide member 40 provides a receiver for receiving the top of the bayonet 14. The bore 50 is tapered such that an internal diameter of the bore 50 reduces in an upward direction to limit upward movement of the bayonet 14, as can be seen most clearly in Figure 1.

The plunger 42 is disposed between the guide member 40 and the pawls 44 and is arranged to engage with the guide member 40. The plunger 42 comprises a generally rectangular plunger body 52 having a bore 54 therethrough. A downwardly facing surface of the plunger body 52 is provided with a pair of contact members 56 disposed on generally opposing sides of the bore 54. A pair of arcuate wall elements 58 extend part way around the bore 54 and away from the body 52 in an upward direction towards the guide member 40. The wall elements 58 are shaped to receive the guide portion 48 of the guide member 40. In other embodiments, a single tubular element may be provided in place of the wall elements.

As can be seen in Figure 1, the bore 54 of the plunger and the bore 50 of the guide member 40 are aligned with one another so as to provide a path or passageway 60 of the locking mechanism 28.

The plunger 42 is arranged to slidably engage with the guide member 40. In particular, the wall elements 58 are arranged to receive the guide portion 48 such that the plunger 42 can slide on the guide member 40 in a direction generally upwards or downwards, towards or away from the mounting portion 46 of the guide member 40. A tubular bearing sleeve 62 (not shown in Figure 3) is provided between the wall elements 58 and the guide portion 48. A bumper 64, preferably of an elastomeric material, is provided on each wall element 58, between the wall element 58 and the mounting portion 46. Movement of the plunger 42 in an upward direction is limited by abutment of the bumpers 64 with the mounting portion 46. In this way, the guide member 40 provides a stop for movement of the plunger 42. The bumpers 64 help to reduce the impact of abutment and also function to retain the sleeve 62 on the plunger 42.

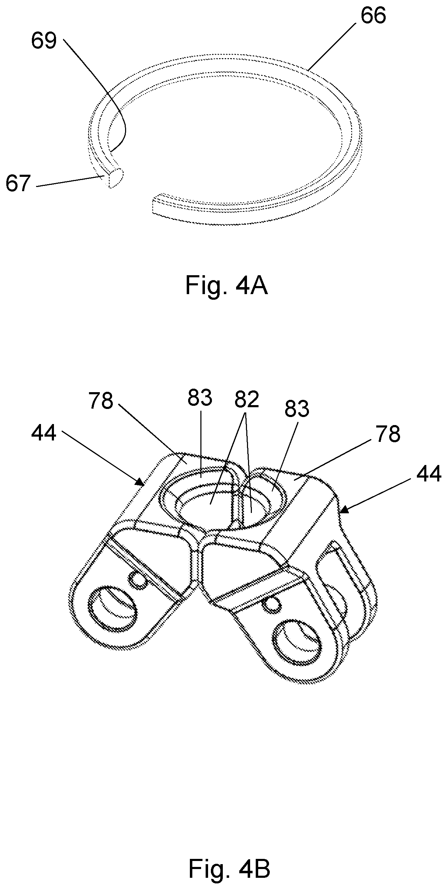

The plunger 42 carries a retaining member, which in this embodiment is a snap ring 66 disposed in the plunger bore 54. The snap ring 66 acts as a coupling that can cooperate with part of the bayonet 14 to couple the bayonet 14 to the plunger 42, as described in more detail below. As can be seen in Figure 4A, the snap ring 66 has a generally D-shaped cross-sectional profile. In this way, an outer portion 67 of the snap ring 66 has a generally square profile for retaining the snap ring 66 in a groove in the plunger bore 54. An inner portion 69 of the snap ring 66 has a rounded profile for engagement with the rib 22 of the bayonet 14, as described further below.

The pawls 44 are disposed generally below the plunger 42, between the first opening 30 and the plunger 42. The pawls 44 are mounted on pivot pins 68 in the housing 26 on either side of the first opening 30. Each pawl 44 comprises a pivot portion 70 for receiving the pivot pin 68, and an engagement portion 72 which extends from the pivot portion 70 towards the plunger 42. The engagement portions 72 of the pawls 44 may be moved towards or away from one another by pivoting each pawl 44 around its pivot pin 68. In this way, the pawls 44 may be pivoted inwardly so as to restrict the passageway 60, or outwardly such that the pawls 44 do not restrict the passageway 60.

As can be seen most clearly in Figure 3, the pivot portion 70 of each pawl 44 comprises a pair of leg portions 74 spaced apart from one another to define a cutout or space 76. A bore is provided in each leg portion 74 such that in use, the respective pivot pin 68 extends through both leg portions 74 and through the space 76. Each pivot pin 68 carries a torsion spring (not shown) disposed in the space 76. The torsion springs are arranged to bias the pawls 44 outwardly into the open position, as shown in Figures 1 and 3. The pawls 44 are arranged to cooperate with the plunger 42 and the bayonet 14, as described further below.

The engagement portion 72 of each pawl 44 comprises a first, outer ramped surface 78 and a second, inner ramped surface 80. The outer ramped surfaces 78 face generally upwardly and away from the passageway 60. The inner ramped surfaces 80 of the pawls 44 face generally towards one another across the passageway 60. The engagement portion 72 of each pawl 44 also has a recessed portion 82 provided by a generally semi-cylindrical cut-out. The recessed portions 82 of the pawls 44 face generally towards one another. Each recessed portion 82 is shaped to define a semi-annular seat portion 83 provided adjacent the outer ramped surface 78. In this way, when the pawls 44 are in a closed position, as shown in Figure 4B, the inner ramped surfaces 80 abut one another, the recessed portions 82 define a generally circular opening and the seat portions 83 together form a generally annular seat. Each seat portion 83 has a surface having a shape that is complementary to the surface of the shoulder 25.

Figure 1 shows the lock apparatus 10 in an unlocked configuration with the bayonet 14 not engaged with the locking mechanism 28, for example prior to hoisting a sail. In this configuration, the bayonet 14 can be moved in a first, upward insertion direction towards the guide member 40 (i.e. into the housing 26) and in a second, downward load direction away from the guide member 40. The bayonet 14 may be moved in the first direction by applying tension to the halyard 4 connected to the first (upper) end of the bayonet 14. The bayonet 14 may be moved in the second direction by a counteracting load (e.g. the weight or tension of the sail) acting on the second (lower) end 18 of the bayonet 14.

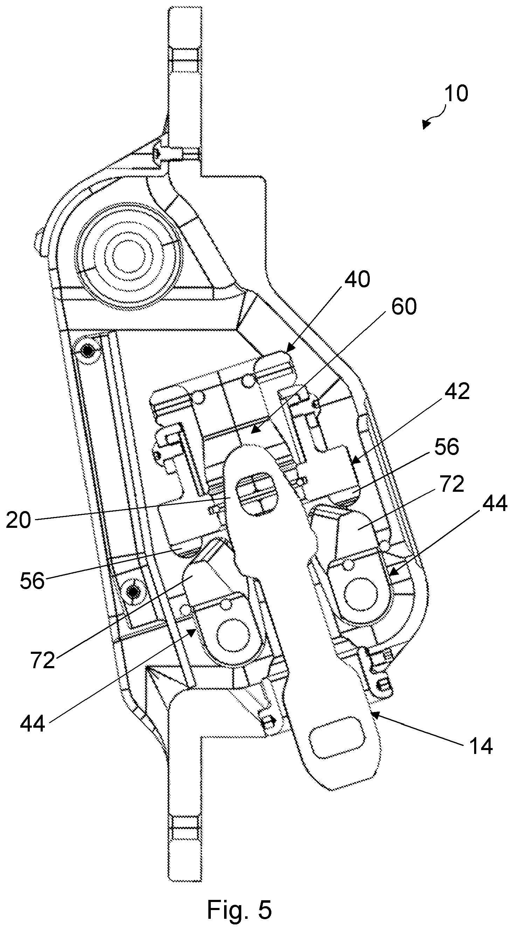

As the halyard 4 is tensioned, the bayonet 14 is pulled in the first (insertion) direction such that the first end 16 of the bayonet 14 is inserted into the locking mechanism 28 along the passageway 60. In Figure 5, the locking mechanism 28 is still in an unlocked configuration, in which the pawls 44 are in the open position and the plunger 42 is held against the mounting portion 46 of the guide member 40 by the pawls 44. In particular, the engagement portion 72 of the pawls is pressed against the contact members 56. Figure 5, shows the head 20 of the bayonet 14 inserted partially into the plunger 42.

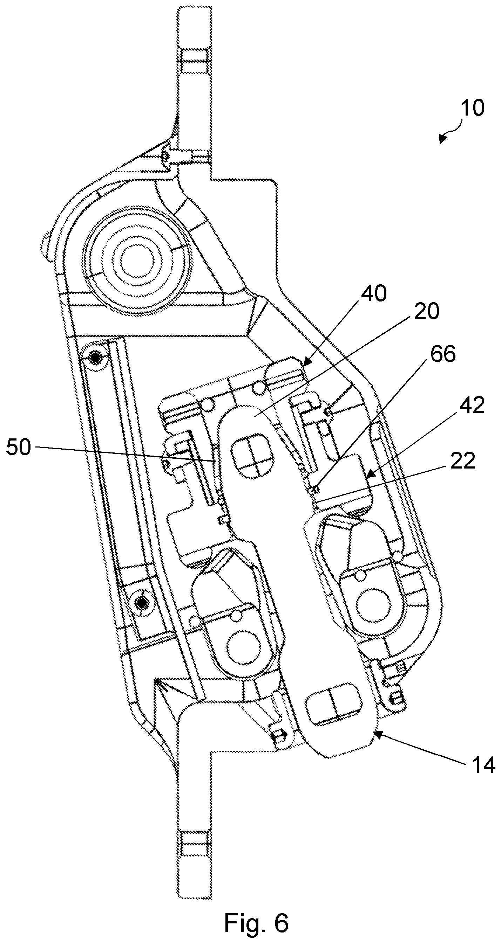

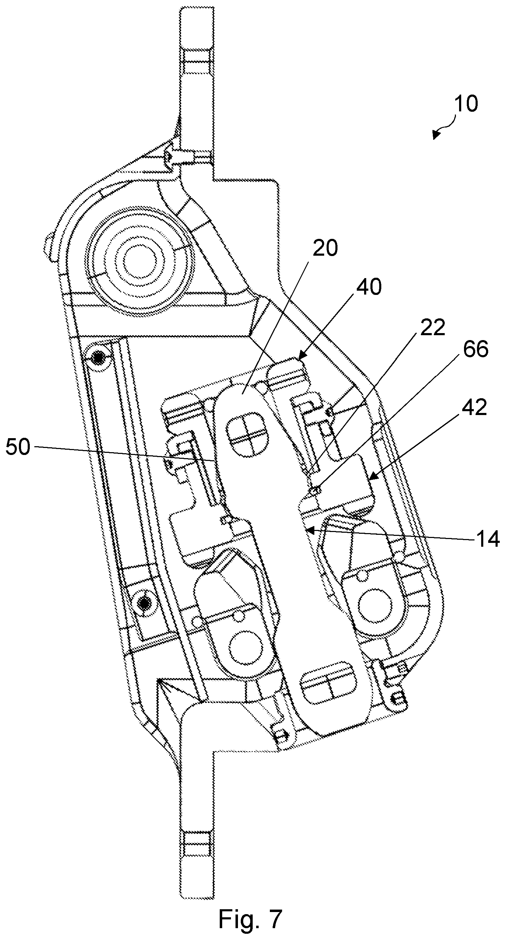

As the halyard 4 is pulled further, the bayonet 14 is drawn further in the first (upward) direction such that the circumferential rib 22 contacts the snap ring 66 in the plunger 42. Figure 6, shows this "hoisted" or "pre-engagement" configuration of the lock apparatus. In this configuration, upward movement of the plunger 42 is stopped by abutment of the bumpers 64 with the mounting portion 46. When a predetermined threshold force acting in the first direction is overcome by the halyard tension, the snap ring 66 deforms sufficiently to allow the head 20 of the bayonet 14 to pass through the snap ring 66 to couple the plunger 42 to the bayonet 14, and the head 20 of the bayonet 14 contacts the tapered bore 50 of the guide member 40. This "over-hoisted", or "pre-locked" configuration, is shown in Figure 7. Further movement of the bayonet 14 in the first direction is blocked by the guide member 40, since the bore 50 of the guide member 40 has a smaller diameter than the diameter of the head 20. In this way, the guide member 40 provides a limiter for movement of the bayonet 14 in the first direction.

With the lock apparatus 10 in the over-hoisted configuration, the lock apparatus 10 may be locked by releasing the tension on the halyard 4. As the halyard tension is released, the bayonet 14 moves in the second direction due to the sail tension. The head 20 of the bayonet 14, now retained in the plunger 42 by the snap ring 66, therefore draws the plunger 42 in the second direction, causing the pawls 44 to pivot against the biasing force of the torsion springs.

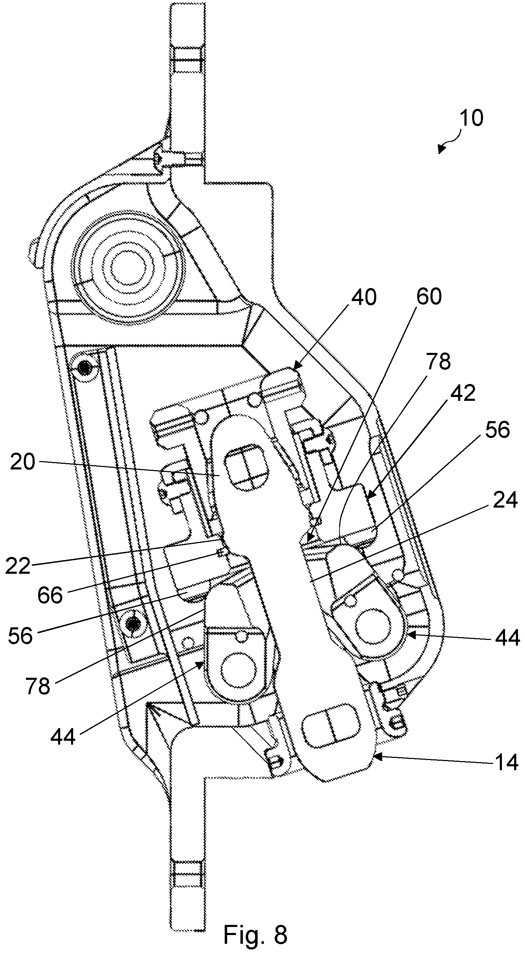

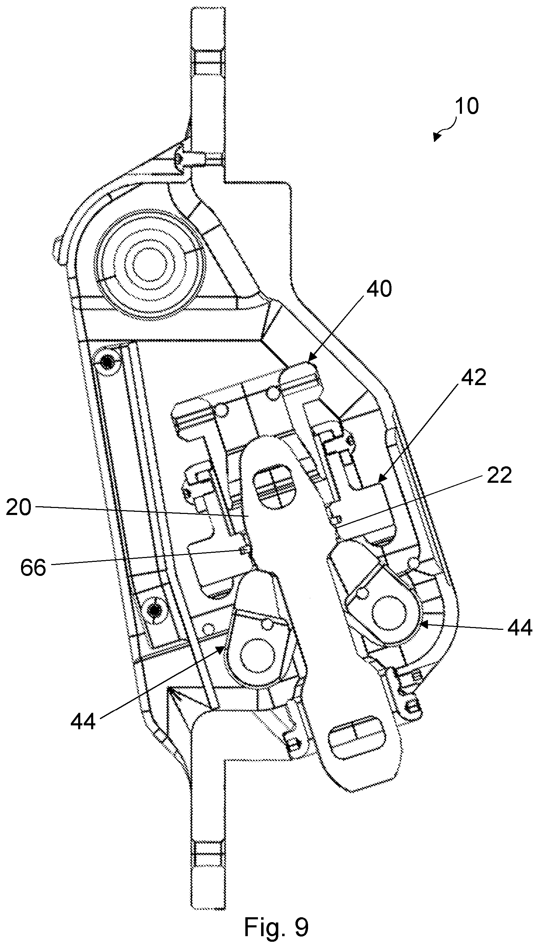

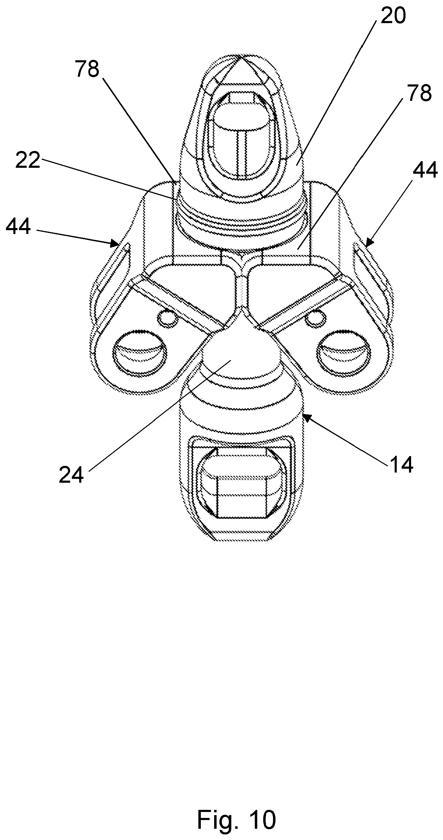

Referring to Figure 8, the contact members 56 bear on the outer ramped surfaces 78 of the pawls 44 such that the pawls 44 are urged inwards towards the closed position. In this way, the pawls 44 restrict the passageway 60 and begin to close around the shank 24 of the bayonet 14. Once the pawls 44 reach the closed position, the sail tension overcomes the predetermined threshold force and the snap ring 66 deforms to allow the rib 22 to pass back through the snap ring 66 in the second (load) direction to decouple the plunger 42 from the bayonet 14. However, removal of the bayonet 14 in the second direction is blocked by the pawls 44, which engage with the head 20 of the bayonet 14, as can be seen in Figures 9 and 10, which show the lock apparatus 10 in a locked configuration.

In this locked configuration, the shank 24 of the bayonet 14 extends through the opening formed by the recessed portions 82 of the pawls 44 and the shoulder 25 is engaged with the seat portions 83. With this arrangement, continuous force acting on the bayonet 14 in the second (load) direction (e.g. sail tension) acts to urge the pawls 44 towards each other so as to keep the pawls 44 in the closed position. In the locked configuration, the plunger 42 is no longer urged against the pawls 44, but rather rests on the pawls 44 and so makes little or no contribution to keeping the pawls 44 in the closed position.

To unlock the lock apparatus 10 and release the bayonet 14, the halyard 4 is tensioned sufficiently to move the bayonet 14 a relatively short distance in the first direction. This movement releases the pawls 44 and the biasing force of the torsion springs moves the pawls 44 back into the open position. The pawls 44 move the plunger 42 in the first direction such that the lock apparatus 10 returns to the unlocked configuration. The bayonet 14 may also carry the plunger 42 in the first direction. The halyard 4 can then be released, and the head 20 of the bayonet 14 may now pass in the second direction through the first opening 30 to lower the sail. Accordingly, the lock apparatus 10 provides a "hoist to lock, hoist to unlock" mechanism of action.

Advantageously, the shape of the engaged surfaces of the bayonet 14 and the pawls 44, and the relatively upright orientation of the pawls 44 is such that a relatively small movement of the bayonet 14 in the first direction is sufficient to release the pawls 44 from the locked position. In some applications of the lock apparatus, release of tension acting in the second direction may be sufficient to allow the pawls to open. It will be appreciated that in order to unlock the lock apparatus 10, the bayonet 14 need only be moved a relatively short distance in the first direction. In particular, the bayonet 14 does not need to be moved as far as the "hoisted" or "over-hoisted" configurations in order to release the pawls 44. In some embodiments, the lock apparatus includes a sensor (e.g. a proximity sensor mounted in the housing) to detect a position of the pawls. In this way the position of the pawls may be monitored so that a user of the lock can determine remotely (e.g. from the cockpit) whether the lock apparatus is locked or unlocked.

Advantageously, the locking mechanism 28 is arranged to mitigate the effects of forces applied to the lock apparatus 10. In particular, the opposed arrangement of the pawls 44 helps to distribute load evenly through the lock apparatus 10. Also, the complementary shape of the shoulder 25 and seat portions 83 of the pawls 44 provides a relatively large contact area between the bayonet 14 and the pawls 44 such that load is spread over a larger area. In this way, contact pressure on parts of the locking mechanism (e.g. between the bayonet 14 and pawls 44) is reduced. Advantageously, the complementary curved surfaces of the shoulder 25 and seat portions 83 allow for some misalignment between the bayonet 14 and the pawls 44, for example from rocking or twisting of the bayonet 14 in use. Furthermore, the arrangement of the bayonet 14 and pawls 44 and the relatively upright angle of the pawls 44 (see Figures 9 and 10) is such that load (e.g. sail tension) on the bayonet 14 is exerted generally downwardly through the pawls 44. In this way, transverse load (e.g. acting outwardly on the pivot 68 and housing 26) is relatively reduced. An advantage of reduced load or more uniform load distribution through parts of the lock apparatus is that some of these parts may be manufactured from more lightweight materials.

To allow access to the locking mechanism 28, for example for servicing and repair, the housing 26 includes first and second removable access plates 84, 86 and a cover 88 (see Figure 1). In this way, in some applications, the lock apparatus may be serviced without the need to detach the lock apparatus from the supporting structure. Furthermore, emergency access to the locking mechanism may be provided, for example to release the bayonet in the event of jamming of the locking mechanism.

The coupling between the lock member and plunger may be provided by any suitable mechanism for releasably coupling the lock member and the plunger. For example, the retaining member may comprise an elastomeric O-ring, or a ball plunger. In other examples, two or more ball plungers may be provided. For example, a pair of ball plungers may be provided on opposite sides of the plunger bore. In further examples, a snap ring or similar feature may be provided on the lock member, to couple with a circumferential rib in the plunger.

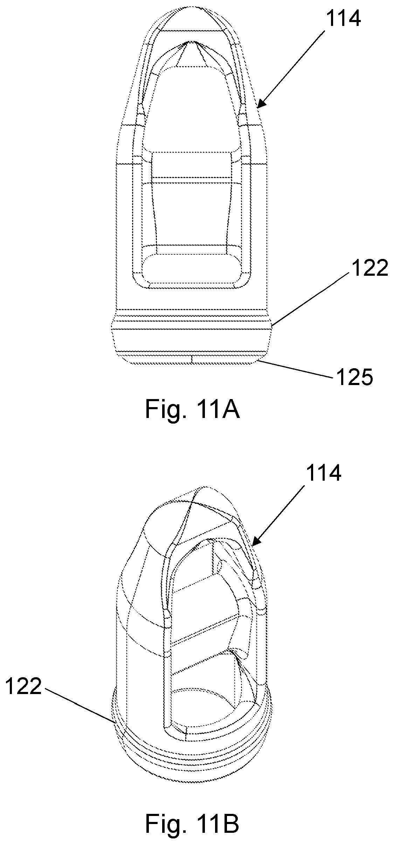

In a variant of the lock member, shown in Figures 11A and 11B, the lock member comprises a bullet 114. The bullet 114 engages with the locking mechanism in substantially the same way as the head 20 of the bayonet 14. Accordingly, the bullet comprises a rib 122, and a generally annular engagement surface 125. The engagement surface 125 functions in the same way as the shoulder 25, to engage with the seat portions 83. As can be seen in Figure 9, in the locked position, the recessed portions 82 of the pawls 44 extend at an angle to one another such that the opening between the pawls 44 is larger towards the lower end of the pawls 44. In this way, in embodiments in which a bullet is used, and therefore a halyard extends between the pawls (rather than the bayonet shank 24), clearance is provided such that the halyard does not chafe on the pawls in use.

The lock member need not be a bullet or bayonet. In some embodiments, the lock member may comprise a ball or bead connected to a halyard.

More than two lock elements may be provided. For example, it would be possible to provide three, four or more pawls, arranged equi-angularly around the passageway, for cooperation with the lock member. Alternatively, in some arrangements, a single lock element can be used. Instead of pivoting pawls, the or each lock element could take a different form, such as a sliding latch.

In the examples described above, the locking mechanism allows for a limited degree of over-hoisting, since movement of the lock member in the first direction is limited by the guide member.

In some embodiments, the stop provided by the guide member may be further from the pawls, such that the lock member travels further in the first direction before being stopped, thereby allowing a greater degree of over-hoist. Also, the plunger may have a greater range of travel in the first direction, such that the lock member can be hoisted further before coupling with the plunger. The guide portion of the guide member may be elongated accordingly for the plunger to slide along. In this case, the plunger may be spaced apart from (e.g. above) the pawls during over-hoisting. In some embodiments, the plunger may be biased away from the pawls, for example by a tension spring.

In other embodiments, the locking mechanism may be arranged such that the lock member may pass through the guide member to allow a greater degree of over-hoisting. In particular, in embodiments in which the lock member is a bullet, the guide member and bullet may be sized to allow the bullet to pass through the guide member. In some such embodiments, the lock member may be more compact and/or the sheave may be sized to allow the lock member to pass through the sheave. This may be advantageous, for example in racing applications, in which sails are hoisted at speed and it may be desirable to allow the bullet to overrun the locking mechanism rather than coming to a sudden halt. In other embodiments, more than one bullet may be provided on the halyard, for example to secure the halyard at different reefing positions, in which case it may be necessary for the lock member to be able to pass fully through the locking mechanism

Although the embodiment described above is described for use with a halyard for hoisting and lowering a sail (for example a headsail such as a jib), it will be appreciated that the lock apparatus could be used in other applications.

In some embodiments the lock apparatus may be used to secure other lines on a sailing vessel. For example, the lock apparatus may be mounted inside a mast as an internal lock, with the locking mechanism oriented to receive the lock member in a downward direction. In another example, the lock apparatus may be mounted in a boom for use as a boom reef lock for securing reef lines, or for securing other lines on the boom such as an outhaul. In other embodiments, the lock apparatus may be used as a tack line lock, for example to secure a tack line of a spinnaker. In further embodiments, the lock apparatus may be suspended from strops for use as a hanging lock. It will be appreciated that in such embodiments, the housing of the lock apparatus may be sized and/or shaped to fit a particular component (e.g. to be mounted in a boom). The locking mechanism may be used in any suitable orientation and the sheave may be absent or in a different position with respect to the locking mechanism. The lock apparatus may be shaped to fit an existing mounting aperture (for instance in a mast), so that the lock apparatus may be retrofitted.

More broadly, the lock apparatus may be used in other applications for securing an item under load. The lock member need not be connected to a flexible line, but could instead be rigidly connected to an item to be locked. In this way, the lock apparatus could be operated by pushing and pulling the lock member into or out of the locking mechanism. Accordingly, in some embodiments, the lock apparatus may not have a second opening.

## Claims

1. A lock apparatus (10) for releasably securing a load to a supporting structure (2) while the load applies force in a load direction, the lock apparatus (10) comprising;
a lock member (14) attached or attachable to the load; and
a lock assembly (12) for attachment to the supporting structure (2) and comprising:
at least one locking element (44) configured to move between a locked position in which the locking element (44) blocks movement of the lock member (14) in the load direction, and an unlocked position in which the lock member (14) is moveable in the load direction;
an actuator (42) arranged to cooperate with the locking element (44);
**characterised in that**:
the lock assembly (12) further comprises a releasable coupling (66) for coupling the actuator (42) to the lock member (14); and
wherein the coupling (66) is arranged to couple the actuator (42) to the lock member (14) upon movement of the lock member (14) towards the actuator (42) in an insertion direction, opposite to the load direction;
wherein subsequent movement of the lock member (14) in the load direction first carries the actuator (42) in the load direction to move the locking element (44) towards the locked position, then causes the coupling (42) to decouple the actuator (42) from the lock member (14) and brings the lock member (14) into engagement with the locking element (44), thereby to keep the locking element (44) in the locked position to block further movement of the lock member (14) in the load direction.

2. The lock apparatus (10) of Claim 1, wherein subsequent movement of the lock member (14) in the insertion direction releases the locking element (44) to move to the unlocked position, releasing the lock member (14) for movement in the load direction.

3. The lock apparatus (10) of any preceding claim, wherein the locking element (44) is biased into the unlocked position.

4. The lock apparatus (10) of any preceding claim, wherein the lock member (14) is attached or attachable to a control line (4) for moving the lock member (14) in the insertion direction.

5. The lock apparatus (10) of any preceding claim, further comprising a guide member (40) arranged to guide movement of the actuator (42).

6. The lock apparatus (10) of any preceding claim, comprising a stop to limit movement of the actuator (42) in the insertion direction, and wherein the coupling (66) is arranged to couple the actuator (42) to the lock member (14) upon movement of the lock member (14) in the insertion direction while movement of the actuator (42) in the insertion direction is limited by the stop.

7. The lock apparatus of Claim 6 when dependent upon Claim 5, wherein the guide member (40) comprises the stop.

8. The lock apparatus (10) of Claim 6 or Claim 7, comprising a limiter positioned to limit movement of the lock member (14) in the insertion direction after coupling of the actuator (42) to the lock member (14).

9. The lock apparatus (10) of any preceding claim, wherein the locking element (44) is pivotally mounted.

10. The lock apparatus (10) of any preceding claim, wherein the locking element (44) comprises a ramped surface (78) arranged to cooperate with the actuator (42) to cause movement of the locking element (44) towards the locked position.

11. The lock apparatus (10) of any preceding claim, wherein the coupling (66) is carried by the actuator (42).

12. The lock apparatus (10) of any preceding claim, wherein, when in the locked position, the locking element (44) at least partly defines a restricted opening having a smaller diameter than a part of the lock member (14).

13. The lock apparatus (10) of any preceding claim, comprising two or more locking elements (44), wherein the locking elements (44) abut one another when in the locked position.

14. The lock apparatus (10) of Claim 4 or of any claim dependent on Claim 4, wherein the control line (4) comprises a halyard (4) and the load is a sail.

15. A lock assembly (12) for use in the lock apparatus (10) of any preceding claim.

## Patentansprüche

1. Verriegelungsvorrichtung (10) zum lösbaren Sichern einer Last an einer Tragstruktur (2), während die Last eine Kraft in einer Lastrichtung ausübt, wobei die Verriegelungsvorrichtung (10) folgendes umfasst:
ein Verriegelungsbauteil (14), das an der Last befestigt oder befestigbar ist; und
eine Verriegelungsanordnung (12), welche zur Befestigung an der Tragstruktur (2) dient und folgendes umfasst:
mindestens ein Verriegelungselement (44), das so konfiguriert ist, dass es sich zwischen einer Verriegelungsposition, in der das Verriegelungselement (44) eine Bewegung des Verriegelungsbauteils (14) in Lastrichtung blockiert, und einer Entriegelungsposition bewegen lässt, in der das Verriegelungselement (14) in Lastrichtung bewegbar ist;
ein Betätigungselement (42), das so angeordnet ist, dass es mit dem Verriegelungselement (44) zusammenwirkt;
**dadurch gekennzeichnet,**
**dass**
die Verriegelungsanordnung (12) ferner eine lösbare Kupplung (66) zum Koppeln des Betätigungselements (42) mit dem Verriegelungsbauteil (14) umfasst; und
wobei die Kupplung (66) so angeordnet ist, dass sie das Betätigungselement (42) bei einer Bewegung des Verriegelungsbauteils (14) in Richtung des Betätigungselements (42) in einer Einführrichtung entgegen der Lastrichtung mit dem Verriegelungsbauteil (14) koppelt,
wobei eine nachfolgende Bewegung des Verriegelungsbauteils (14) in Lastrichtung zunächst das Betätigungselement (42) in Lastrichtung bewegt, um das Verriegelungselement (44) in Richtung der Verriegelungsposition zu bewegen und dann bewirkt, dass die Kupplung (66) das Betätigungselement (42) vom Verriegelungsbauteil (14) entkoppelt und die Verriegelung das Verriegelungsbauteil (14) mit dem Verriegelungselement (44) in Eingriff bringt, um dadurch das Verriegelungselement (44) in der Verriegelungsposition zu halten, um eine weitere Bewegung des Verriegelungsbauteils (14) in Lastrichtung zu blockieren.

2. Verriegelungsvorrichtung (10) nach Anspruch 1,
wobei eine anschließende Bewegung des Verriegelungsbauteils (14) in Einführrichtung das Verriegelungselement (44) freigibt, so dass es in die Entriegelungsposition bewegt wird und das Verriegelungsbauteil (14) für eine Bewegung in Lastrichtung freigibt.

3. Verriegelungsvorrichtung (10) nach einem der vorigen Ansprüche,
wobei das Verriegelungselement (44) in die Entriegelungsposition vorgespannt ist.

4. Verriegelungsvorrichtung (10) nach einem der vorigen Ansprüche,
wobei das Verriegelungsbauteil (14) an einer Steuerleine (4) angebracht oder anbringbar ist, um das Verriegelungsbauteil (14) in Einführrichtung zu bewegen.

5. Verriegelungsvorrichtung (10) nach einem der vorigen Ansprüche,
die ferner ein Führungselement (40) umfasst, das so angeordnet ist, dass es die Bewegung des Betätigungselements (42) führt.

6. Verriegelungsvorrichtung (10) nach einem der vorigen Ansprüche,
umfassend einen Anschlag zum Begrenzen der Bewegung des Betätigungselements (42) in der Einführrichtung, wobei die Kupplung (66) so angeordnet ist, dass sie das Betätigungselement (42) mit dem Verriegelungsbauteil (14) koppelt, wenn sich das Verriegelungsbauteil (14) in Einführrichtung bewegt, während die Bewegung des Betätigungselements (42) in Einführrichtung durch den Anschlag begrenzt wird.

7. Verriegelungsvorrichtung nach Anspruch 6, abhängig von Anspruch 5,
wobei das Führungselement (40) den Anschlag umfasst.

8. Verriegelungsvorrichtung (10) nach Anspruch 6 oder Anspruch 7,
die einen Begrenzer umfasst, der so positioniert ist, dass er die Bewegung des Verriegelungsbauteils (14) in Einführrichtung nach dem Koppeln des Betätigungselements (42) mit dem Verriegelungsbauteil (14) begrenzt.

9. Verriegelungsvorrichtung (10) nach einem der vorigen Ansprüche,
wobei das Verriegelungselement (44) schwenkbar gelagert ist.

10. Verriegelungsvorrichtung (10) nach einem der vorigen Ansprüche,
wobei das Verriegelungselement (44) eine rampenförmige Fläche (78) umfasst, die so angeordnet ist, dass sie mit dem Betätigungselement (42) zusammenwirkt, um eine Bewegung des Verriegelungselements (44) in Richtung der Verriegelungsposition zu bewirken.

11. Verriegelungsvorrichtung (10) nach einem der vorigen Ansprüche,
bei welcher die Kupplung (66) vom Betätigungselement (42) getragen wird.

12. Verriegelungsvorrichtung (10) nach einem der vorigen Ansprüche,
bei welcher das Verriegelungselement (44) in der Verriegelungsposition zumindest teilweise eine begrenzte Öffnung mit einem kleineren Durchmesser als ein Teil des Verriegelungsbauteils (14) definiert.

13. Verriegelungsvorrichtung (10) nach einem der vorigen Ansprüche,
welche zwei oder mehr Verriegelungselemente (44) umfasst, wobei die Verriegelungselemente (44) in der Verriegelungsposition aneinander anliegen.

14. Verriegelungsvorrichtung (10) nach Anspruch 4 oder nach einem von Anspruch 4 abhängigen Anspruch,
bei welcher die Steuerleine (4) eine Fallleine (4) umfasst und die Last ein Segel ist.

15. Verriegelungsanordnung (12) zur Verwendung in der Verriegelungsvorrichtung (10) eines vorigen Anspruchs.

## Revendications

1. Appareil de verrouillage (10) pour fixer, de manière amovible, une charge sur une structure de support (2) alors que la charge applique une force dans une direction de charge, l'appareil de verrouillage (10) comprenant :
un organe de verrouillage (14) fixé ou pouvant être fixé sur la charge ; et
un ensemble de verrouillage (12) pour la fixation à la structure de support (2) et comprenant :
au moins un élément de verrouillage (44) configuré pour se déplacer entre une position verrouillée dans laquelle l'élément de verrouillage (44) empêche le mouvement de l'organe de verrouillage (14) dans la direction de charge, et une position déverrouillée dans laquelle l'organe de verrouillage (14) est mobile dans la direction de charge ;
un actionneur (42) agencé pour coopérer avec l'élément de verrouillage (44) ;
**caractérisé en ce que** :
l'ensemble de verrouillage (12) comprend en outre un couplage amovible (66) pour coupler l'actionneur (42) à l'organe de verrouillage (14) ; et
dans lequel le couplage (66) est agencé pour coupler l'actionneur (42) à l'organe de verrouillage (14) suite au mouvement de l'organe de verrouillage (14) vers l'actionneur (42) dans une direction d'insertion, opposée à la direction de charge ;
dans lequel le mouvement consécutif de l'organe de verrouillage (14) dans la direction de charge, porte tout d'abord l'actionneur (42) dans la direction de charge afin de déplacer l'élément de verrouillage (44) vers la position verrouillée, amène ensuite le couplage (66) à découpler l'actionneur (42) de l'organe de verrouillage (14) et amène l'organe de verrouillage (14) en mise en prise avec l'élément de verrouillage (44), pour maintenir ainsi l'élément de verrouillage (44) dans la position verrouillée pour empêcher le mouvement supplémentaire de l'organe de verrouillage (14) dans la direction de charge.

2. Appareil de verrouillage (10) selon la revendication 1, dans lequel le mouvement consécutif de l'organe de verrouillage (14) dans la direction d'insertion libère l'élément de verrouillage (44) afin de se déplacer dans la position déverrouillée, libérant l'organe de verrouillage (14) pour le mouvement dans la direction de charge.

3. Appareil de verrouillage (10) selon l'une quelconque des revendications précédentes, dans lequel l'élément de verrouillage (44) est sollicité dans la position déverrouillée.

4. Appareil de verrouillage (10) selon l'une quelconque des revendications précédentes, dans lequel l'organe de verrouillage (14) est fixé ou peut être fixé à une ligne de commande (4) pour déplacer l'organe de verrouillage (14) dans la direction d'insertion.

5. Appareil de verrouillage (10) selon l'une quelconque des revendications précédentes, comprenant en outre un organe de guidage (40) agencé pour guider le mouvement de l'actionneur (42).

6. Appareil de verrouillage (10) selon l'une quelconque des revendications précédentes, comprenant une butée pour limiter le mouvement de l'actionneur (42) dans la direction d'insertion, et dans lequel le couplage (66) est agencé pour coupler l'actionneur (42) à l'organe de verrouillage (14) suite au mouvement de l'organe de verrouillage (14) dans la direction d'insertion alors que le mouvement de l'actionneur (42), dans la direction d'insertion, est limité par la butée.

7. Appareil de verrouillage (10) selon la revendication 6, lorsqu'elle dépend de la revendication 5, dans lequel l'organe de guidage (40) comprend la butée.

8. Appareil de verrouillage (10) selon la revendication 6 ou la revendication 7, comprenant un limiteur positionné pour limiter le mouvement de l'organe de verrouillage (14) dans la direction d'insertion après le couplage de l'actionneur (42) à l'organe de verrouillage (14).

9. Appareil de verrouillage (10) selon l'une quelconque des revendications précédentes, dans lequel l'élément de verrouillage (44) est monté de manière pivotante.

10. Appareil de verrouillage (10) selon l'une quelconque des revendications précédentes, dans lequel l'élément de verrouillage (44) comprend une surface à rampe (78) agencée pour coopérer avec l'actionneur (42) afin de provoquer le mouvement de l'élément de verrouillage (44) vers la position verrouillée.

11. Appareil de verrouillage (10) selon l'une quelconque des revendications précédentes, dans lequel le couplage (66) est porté par l'actionneur (42).

12. Appareil de verrouillage (10) selon l'une quelconque des revendications précédentes, dans lequel, lorsqu'il est dans la position verrouillée, l'élément de verrouillage (44) définit, au moins partiellement, une ouverture limitée, ayant un plus petit diamètre qu'une partie de l'organe de verrouillage (14).

13. Appareil de verrouillage (10) selon l'une quelconque des revendications précédentes, comprenant deux éléments de verrouillage (44) ou plus, dans lequel les éléments de verrouillage (44) viennent en butée les uns contre les autres, lorsqu'ils sont dans la position verrouillée.

14. Appareil de verrouillage (10) selon la revendication 4 ou selon l'une quelconque des revendications dépendant de la revendication 4, dans lequel la ligne de commande (4) comprend une drisse (4) et la charge est une voile.

15. Ensemble de verrouillage (12) destiné à être utilisé dans l'appareil de verrouillage (10) selon l'une quelconque des revendications précédentes.
